# EUROPÄISCHE PATENTSCHRIFT

(11) **EP 2 445 678 B1**
(45) Veröffentlichungstag und Bekanntmachung des Hinweises auf die Patenterteilung: **04.09.2013**
(21) Anmeldenummer: 10726439.2
(22) Anmeldetag: 18.06.2010
(51) Int. Cl.: B23K 20/10, B29C 65/00, B29C 65/02, B29C 65/08, B29C 65/18, B41F 19/06

(54) **FÜGEVORRICHTUNG ZUM FÜGEN ZWEIER WERKSTÜCKE MIT ENTWEDER EINEM SCHWENKBAREN STEMPEL ODER EINEM SCHWENKBAREN AUFLAGETISCH**
JOINING DEVICE FOR JOINING TWO WORKPIECES HAVING EITHER A PIVOTABLE STAMP OR A PIVOTABLE SUPPORTING TABLE
DISPOSITIF D'ASSEMBLAGE POUR ASSEMBLER DEUX PIÈCES COMPRENANT SOIT UNE ÉTAMPE PIVOTANTE SOIT UNE TABLE D'APPUI PIVOTANTE

(30) Priorität: 22.06.2009 DE 102009030115
(43) Veröffentlichungstag der Anmeldung: 02.05.2012
(73) Patentinhaber: Leonhard Kurz Stiftung & Co. KG, 90763 Fürth (DE)
(72) Erfinder: BIEBER, Reinhard, 91189 Rohr (DE)
(74) Vertreter: Zinsinger, Norbert
(86) Internationale Anmeldenummer: PCT/EP2010/003694
(87) Internationale Veröffentlichungsnummer: WO 2010/149314

(56) Entgegenhaltungen:
- DE-A1- 19 917 133
- US-A- 3 661 661
- US-A- 4 896 811
- US-A- 4 906 316
- US-A- 6 019 154

## Beschreibung

Die Erfindung betrifft eine Fügevorrichtung zum Fügen zweier Werkstücke mit einem zwischen einer unteren Arbeitsposition und einer oberen Befüllposition auf und ab bewegbaren Stempel, wobei zwischen dem Stempel und dem Auflagetisch eine erstes Werkstück und ein unter dem ersten Werkstück angeordnetes zweites Werkstück anordenbar sind, gemäß dem Oberbegriff des Anspruchs 1 (sichc, z.B., US 4 896 811).

Zu derartigen Fügevorrichtung zählen beispielsweise Hubpräge-Vorrichtungen für das Heißprägen von Substraten, d. h. das zumindest partielle Applizieren einer Übertragungslage einer Heißprägefolie auf ein Substrat mittels Einwirken von Druck und Wärme auf die auf dem Substrat aufliegenden Heißprägefolie. Im Hubpräge-Verfahren wird eine Heißprägefolie durch einen beheizten

Prägestempel aus Metall oder Silikon in einer kontinuierlichen Auf- und Abwärtsbewegung auf das Substrat übertragen. Dabei bestimmt die Form des Prägestempels die Form der Ausprägung. Die Hubprägung eignet sich unter anderem für die randscharfe und positionsgenaue Applikation von Einzel-Hologrammbildern oder auch für das randscharfe Ausprägen und Applizieren von Motiven mit partiell ausgebildeter Flächenbelegung.

In Abhängigkeit von der Ausbildung der von der Heißprägefolie auf das Substrat zu übertragenden Übertragungslage, insbesondere durch lokal unterschiedliche Flächenbelegung der Übertragungslage, kann vorteilhafterweise vorgesehen sein, die Prägekraft lokal zu variieren. Unterschiedliche lokale Prägekräfte sind beispielsweise durch bereichsweise Unterlagen oder durch Stellschrauben möglich, welche es ermöglichen, einen Prägekopf oder einen Auflagetisch für das zu beprägende Substrat geringfügig zu kippen und so unterschiedliche lokale Prägekräfte einzustellen. Nachteilig ist, dass die Einstellung meist manuell unmittelbar an der Prägevorrichtung in unmittelbarer Nachbarschaft des heißen Prägestempels vorgenommen werden muss, dass es sich um einen langwierigen Prozess handelt, weil die lokalen Prägekräfte nicht unmittelbar messbar und/oder nicht oder nur unzureichend genau nachvollziehbar sind und dass hohe Umrüstzeiten auftreten.

Weiter können zu den o. g. Fügevorrichtungen Ultraschall- und Hochfrequenzschweißvorrichtungen gezählt werden, die beispielsweise eingesetzt werden, um zwei Werkstücke aus Kunststoff miteinander zu verschweißen, wie zum Beispiel PKW-Scheinwerfergehäuse oder andere mehrteilige, zu verschweißende Kunststoffgehäuse.

Die US 4 896 811 beschreibt eine Vorrichtung zum Bonden von Anschlussdrähten eines Chips auf ein Substrat. Die Vorrichtung weist einen Träger für das Substrat auf, in den ein Druckmechanismus mit einem Stempel eingeschlossen ist, der auf die untere Oberfläche des Substrats so drückt, dass die obere Oberfläche des Substrats an starre Widerlager bildende Anschlägen anliegt.

Die US 3 661 661 A beschreibt eine Vorrichtung und ein Verfahren für Ultraschallschweißen mehrerer relativ flacher Elemente oder Platten. Eine Grundplatte und eine Arbeitsplattform sind vorgesehen, die durch ein Kugelgelenk miteinander verbunden sind. Die Neigung der Arbeitsplattform zur Grundplatte ist durch Einstellschrauben einstellbar, die eine Auflage für die Arbeitsplattform bilden.

Aufgabe der vorliegenden Erfindung ist es, eine verbesserte Fügevorrichtung anzugeben.

Erfindungsgemäß wird diese Aufgabe mit einer Fügevorrichtung zum Fügen zweier Werkstücke mit einem zwischen einer unteren Arbeitsposition und einer oberen Befüllposition auf und ab bewegbaren Stempel gelöst, wobei zwischen dem Stempel und dem Auflagetisch ein erstes Werkstück und ein unter dem ersten Werkstück angeordnetes zweites Werkstück anordenbar sind, wobei der Auflagetisch schwenkbar um zwei senkrecht zueinander und senkrecht auf der Bewegungsachse des Stempels stehende Schwenkachsen gelagert ist und mittels Stelleinrichtungen für die Erzeugung einer Prägekraft beim Zusammenwirken mit dem Stempel, die der Summe der Stellkräfte der Stelleinrichtungen gleich ist, um die zwei

Schwenkachsen schwenkbar ist, wobei der Stempel in der Arbeitsposition ein starres Widerlager bildet, oder wobei der Stempel schwenkbar um zwei senkrecht zueinander und senkrecht auf der Bewegungsachse des Stempels stehende Schwenkachsen gelagert ist und mittels Stelleinrichtungen für die Erzeugung einer Prägekraft beim Zusammenwirken mit dem Auflagetisch, die der Summe der Stellkräfte der Stelleinrichtungen gleich ist, um die zwei Schenkachsen schwenkbar ist, wobei der Auflagetisch in der Arbeitsposition ein starres Widerlager bildet, wobei vorgesehen ist, dass die von den Stelleinrichtungen erzeugten Stellkräfte während des Betriebs und von fern einstellbar sind, sichc Anspruch 1.

Die erfindungsgemäße Vorrichtung bietet den Vorteil, Stellkräfte bzw. lokale Fügekräfte direkt einzustellen und so die Zurichtarbeit an der Fügevorrichtung zu vereinfachen und zu verkürzen. Es ist also nicht notwendig, durch händisch bzw. manuell verstellte Stellschrauben eine Schrägstellung hervorzurufen, die den Fügedruck an der angehobenen Stelle erhöht. Ein weiterer Vorteil ist, dass die Stellkräfte während des Betriebs und von fern einstellbar sind. Eine Verletzungsgefahr durch Manipulation Stempel besteht nicht mehr. Langes Herumprobieren und Experimentieren ist vermieden, die eingestellten Werte sind jederzeit direkt ablesbar und reproduzierbar.

Der Stempel ist im Wesentlichen senkrecht zu dem Auflagetisch auf- und ab bewegbar. Zur Beschreibung der Hubbewegung ist beispielsweise ein rechtwinkliges x-y-z-Koordinatensystem verwendbar, bei dem die Hubbewegung in der z-Achse verläuft und die Koordinaten des Auflagetisches durch die x- und y-Koordinaten beschreibbar sind.

Es kann vorgesehen sein, dass das erste Werkstück eine Heißprägefolie ist, wobei die Heißprägefolie mindestens eine Übertragungslage und eine Trägerfolie aufweist, dass das zweite Werkstück ein mit mindestens einem Abschnitt der Übertragungslage zu beprägendes Substrat ist, und dass der Stempel ein beheizter Prägestempel ist. Derartige als Heißprägevorrichtungen bekannte Fügevorrichtungen werden eingesetzt, um flächenförmige oder dreidimensionale Substrate zu dekorieren, wobei die Übertragungslage der Heißprägefolie nach dem Fügen bzw. Prägen auf dem Substrat haftet und die Trägerfolie anschließend abgezogen wird. Beim Abziehen der Trägerfolie werden auch die nicht übertragenen Restabschnitte der Übertragungslage abgezogen.

Weiter kann vorgesehen sein, dass der Stempel eine Sonotrode ist. Die Sonotrode sendet Ultraschallwellen aus, die das erste und das zweite Werksfück miteinander verschweißen. Durch den zusätzlichen Druckaufbau zwischen Sonotrode und Auflagetisch wird das Verschweißen begünstigt.

Weiter kann vorgesehen sein, dass der Stempel ein Hochfrequenzschweißkopf ist. Das Hochfrequenzschweißen wird bevorzugt zum Verbinden von Werkstücken aus Kunststoff eingesetzt. So können beispielsweise PKW-Scheinwerfergehäuse aus zwei Gehäusehälften bestehen, die durch Hochfrequenzschweißen miteinander verbunden sind.

Es können vier Stelleinrichtungen vorgesehen sein, die in einem vorzugsweise rechtwinkligen Viereck angeordnet sind, wobei ein um zwei senkrecht zueinander stehende Achsen schwenkbares Gelenk in einem Bereich, der den Schnittpunkt der Diagonalen des Vierecks aufweist, angeordnet ist. Bei dem Gelenk kann es sich vorzugsweise um ein Kugelgelenk handeln. Wenn vorstehend beschriebene Koordinatenzuordnung benutzt wird, handelt es sich bei den zwei senkrecht zueinander stehenden Achsen um die x- und die y-Achse.

Es können alternativ aber auch drei Stelleinrichtungen vorgesehen sein, die in einem vorzugsweise gleichschenkligen Dreieck angeordnet sind, wobei das um zwei senkrecht zueinander stehende Achsen schwenkbare Gelenk in einem Bereich, der den Mittelpunkt des Dreiecks aufweist, angeordnet ist. Bei dem Gelenk kann es sich vorzugsweise um ein Kugelgelenk handeln.

Die Stelleinrichtungen können als pneumatische oder hydraulische Stelleinrichtungen ausgebildet sein, beispielsweise als pneumatische oder hydraulische Zylinder. Die Stelleinrichtungen können direkt wirkend sein, aber auch mit Getrieben gekoppelt sein, um beispielsweise eine besonders feinfühlige Einstellung zu erreichen.

In einer bevorzugten Ausführung kann vorgesehen sein, dass die Stelleinrichtung ein Balgzylinder ist.

Weiter können die Stelleinrichtungen als elektromechanische Stelleinrichtungen ausgebildet sein. So kann eine elektromechanische Stelleinrichtung beispielsweise aus einem Elektromotor und einem selbsthemmenden Getriebe gebildet sein. Bei dem Getriebe kann es sich beispielsweise um ein Schraubengetriebe handeln, bei dem ein Stellmotor eine Schraubspindel antreibt, die eine drehgesicherte Mutter antreibt. Als Elektromotor kann vorteilhafterweise ein Schrittmotor vorgesehen sein, so dass auf besonders einfache Weise eine reproduzierbare Einstellung der Stelleinrichtung möglich ist.

Weiter kann vorgesehen sein, dass die mit den Stelleinrichtungen zusammenwirkende Einrichtung eine Verdrehsicherung aufweist. Bei der besagten Einrichtung kann es sich um den Auflagetisch oder um die Stempelplatte des Stempels handeln. Die Verdrehsicherung kann beispielsweise durch seitliche Führungen einer rechteckigen oder quadratischen Platte gebildet sein. Es ist aber auch möglich, eine runde Platte vorzusehen und die Verdrehsicherung durch einen oder mehrere in einer nutförmige Ausnehmung der kreisförmigen Platte eingreifenden Stift bzw. Stifte oder dergleichen auszubilden. Die kreisförmige Platte kann auch einen tangentialen geraden Abschnitt aufweisen, der mit einem geraden Anschlag zusammenwirkt. Weiter kann es sich bei der kreisförmigen Platte um eine Platte mit einer geometrisch exakten Kreiskontur, aber auch um eine Platte mit einer elliptischen Kontur oder mit einer beliebig kurvenförmigen Kontur handeln.

Weiter kann vorgesehen sein, dass die mit den Stelleinrichtungen zusammenwirkende Einrichtung einen Anschlag zur Begrenzung der Stellwege der Stelleinrichtungen aufweist. Dieser Anschlag ist insbesondere dann von Vorteil, wenn die Stelleinrichtung dauernd kraftbeaufschlagt ist, was insbesondere auf pneumatische und hydraulische Stelleinrichtungen zutreffen kann. Wenn es sich bei der mit den Stelleinrichtungen zusammenwirkende Einrichtung beispielsweise um den Auflagetisch handelt, könnte der Auflagetisch eine Lage außerhalb des vorgesehenen Verstellbereichs einnehmen, wenn der Stempel nicht im mittelbaren oder unmittelbaren Kontakt mit der Auflagetisch ist, d. h. außerhalb der Fügeposition ist.

Es kann vorgesehen sein, dass der Anschlag als einstellbarer Anschlag ausgebildet ist.

Weiter kann vorgesehen sein, dass die das starre Widerlager bildende Einrichtung schwenkbar um zwei senkrecht zueinander und senkrecht auf der Bewegungsachse des Stempels stehende Schwenkachsen einstellbar ist. Es kann es sich dabei beispielsweise um den beheizten Prägestempel einer als Heißprägevorrichtung ausgebildeten Fügevorrichtung handeln, insbesondere um die Prägeplatte des Prägestempels.

In einer vorteilhaften Ausbildung kann vorgesehen sein, dass die das starre Widerlager bildende Einrichtung mittels Stellschrauben schwenkbar einstellbar ist. Wie vorstehend beschrieben, kann also beispielsweise vorgesehen sein, dass die Prägeplatte des Prägestempels mittels Stellschrauben einstellbar, ist.

Es kann auch vorgesehen sein, dass die das starre Widerlager bildende Einrichtung mittels Unterlagen schwenkbar einstellbar ist. Bei den Unterlagen kann es sich beispielsweise um Metallplättchen unterschiedlicher Dicke handeln, die beispielsweise zwischen der Unterseite der Prägeplatte und der Oberseite der Prägeplattenaufnahme einlegbar sind.

Weiter kann vorgesehen sein, dass auf dem Auflagetisch eine Aufnahme für das Substrat angeordnet ist.

Es kann bei als Heißprägevorrichtung ausgebildeten Fügevorrichtungen vorgesehen sein, dass die Vorrichtung eine Vorrats- und Transporteinrichtung für die Heißprägefolie aufweist. Die Heißprägefolie kann beispielsweise auf einer Vorratsrolle bereitgestellt sein und die nach dem Prägen abgezogene Trägerschicht kann auf eine Aufwickelrolle aufgewickelt sein. Zur exakten Positionierung der Heißprägefolie kann die Folie beispielsweise optische Markierungen aufweisen, die von optischen Sensoren erfasst werden, die mit einer Steuerungseinrichtung der Transporteinrichtung zusammenwirken. Weiter kann vorgesehen sein, dass die Stelleinrichtungen Sensoren zur Bestimmung der Stellkraft aufweisen und/oder eine kalibrierte Kennlinie der Abhängigkeit der Stellkraft von der Eingangsgröße der Stelleinrichtung aufweisen. Es kann also vorgesehen sein, dass die Stelleinrichtung zugleich die Funktion eines Kraftsensors erfüllt. Bei einem pneumatischen oder hydraulischen Stellzylinder ist beispielsweise die Stellkraft bestimmbar als Quotient des Zylinderdrucks und der Kolbenfläche.

Weiter kann vorgesehen sein, dass die Stelleinrichtungen mit einer Steuerungseinrichtung zur Messung und/oder Einstellung der Stellkraft verbunden sind.

Vorzugsweise kann es sich bei der mit den Stelleinrichtungen zusammenwirkende Einrichtung um eine biegesteife Platte handeln. Es kann aber auch vorgesehen sein, dass die Platte sich unter Belastung verwindet oder in Richtung der Stellkraft elastisch verformt.

Die Erfindung wird nun anhand von Ausführungsbeispielen näher erläutert. Es zeigen
- Fig. 1: eine erfindungsgemäße Fügevorrichtung in schematischer Darstellung;
- Fig. 2: ein erstes Ausführungsbeispiel eines Auflagetisches in der Draufsicht;
- Fig. 3: eine Schnittdarstellung des Auflagetischs entlang der Schnittlinie III-III in Fig. 2 mit hochgefahrenem Stempel;
- Fig. 4: eine Schnittdarstellung des Auflagetischs entlang der Schnittlinie III-III in Fig. 2 mit niedergefahrenem Stempel;
- Fig. 5: ein zweites Ausführungsbeispiel eines Auflagetisches in der Draufsicht;
- Fig. 6: ein drittes Ausführungsbeispiel in schematischer perspektivischer Darstellung;
- Fig. 7: die Vorrichtung in Fig. 6 in schematischer Vorderansicht:
- Fig. 8: eine Bildschirmansicht eines Steuerteils;
- Fig. 9: ein Druck-Zeit-Diagramm der Vorrichtung in Fig. 6.

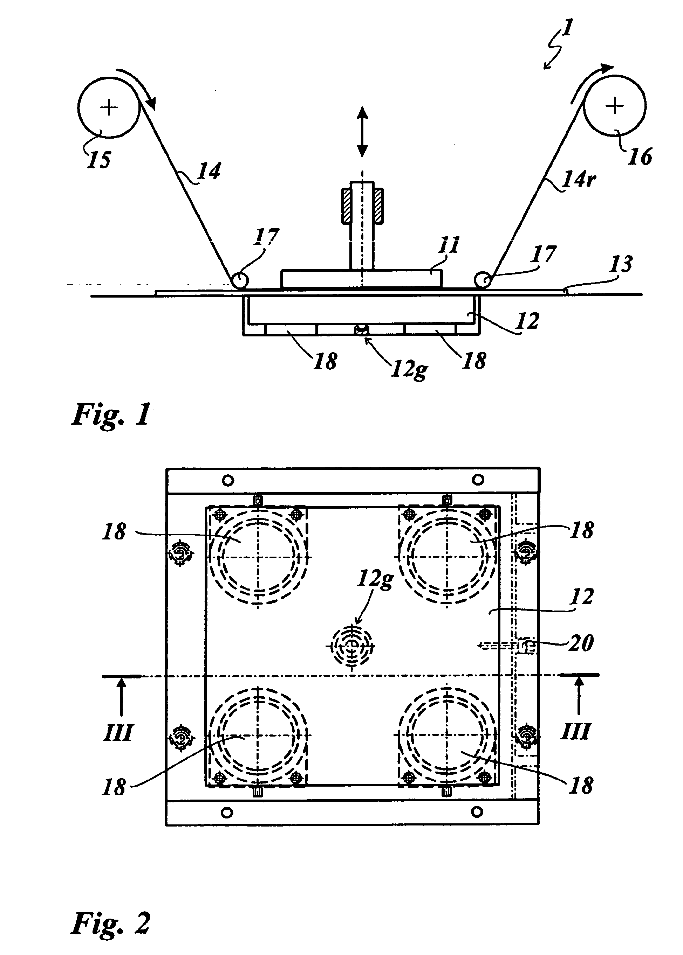

Fig. 1 zeigt eine Fügevorrichtung, die als Hubpräge-Vorrichtung 1 zum Heißprägen von Folien ausgebildet ist. Im Hubpräge-Verfahren wird die Übertragungsschicht einer Heißprägefolie durch einen beheizten Prägestempel aus Metall oder Silikon oder aus Metall mit einer Silikonauflage in einer kontinuierlichen Auf- und Abwärtsbewegung auf das Substrat übertragen. Dabei bestimmt die Form des Prägestempels die Form der Ausprägung. Das Hubpräge-Verfahren eignet sich unter anderem für die randscharfe und positionsgenaue Applikation von Einzel-Hologrammbildern auf zu dekorierenden Substraten, wie beispielsweise Verpackungen oder Erzeugnissen.

Die Hubpräge-Vorrichtung 1 weist einen auf- und ab bewegbaren beheizten Prägestempel 11 sowie einen mit dem Prägestempel 11 zusammenwirkenden Auflagetisch 12 auf, zwischen denen ein zu beschichtendes Substrat 13 und eine Heißprägefolie 14 angeordnet sind. Eine Vorratsrolle 15, eine Aufwickelrolle 16 und Umlenkrollen 17 bilden eine Vorrats- und Transporteinrichtung für die Heißprägefolie 14, wobei in dem in Fig. 1 dargestellten Ausführungsbeispiel die Mittel zum Zuführen und Positionieren der Heißprägefolie 14 nicht näher dargestellt sind. Ebenso sind die Mittel zum Zuführen und Positionieren des Substrats 13 nicht näher dargestellt.

Die Hubpräge-Vorrichtung 1 weist Mittel auf, um die Heißprägefolie 14 und das Substrat 13 so zueinander auszurichten, dass ein auf der Heißprägefolie 14 angeordnetes Dekorationselement vorzugsweise registergenau über einem dafür vorgesehenen Bereich des Substrats 13 angeordnet ist und sodann, wie weiter unten beschrieben, auf das Substrat 13 übertragen wird. Beispielsweise können diese Mittel darin bestehen, dass auf der Heißprägefolie 14 pro Dekorationselement eine oder mehrere Registermarken angeordnet sind, welche mit einem insbesondere optischen Sensor detektiert werden. Der Sensor kann dabei in fester Verbindung an der Hubpräge-Vorrichtung 1 angeordnet sein und detektiert mit Hilfe der Registermarken auf der Heißprägefolie 14 deren registergenaue Lage zu dem zu dekorierenden Werkstück in der Hubpräge-Vorrichtung 1.

Nach dem Prägen verbleibt eine Restfolie 14r, die im Wesentlichen aus der von der Übertragungsschicht abgezogenen Trägerschicht der Heißprägefolie 14 besteht und die auf der Aufwickelrolle 16 aufgewickelt ist.

, gemäß der Erfindung.

Der Auflagetisch 12 ist auf Stelleinrichtungen 18 angestützt, die beispielsweise als hydraulische oder pneumatische Stelleinrichtungen oder als elektromechanische Stelleinrichtungen ausgebildet sein können. Die Stelleinrichtungen 18 erzeugen, gemäß der Erfindung beim Zusammenwirken mit dem Prägestempel 11 eine Prägekraft, die der Summe der Stellkräfte der Stelleinrichtungen 18 gleich ist. Die Stellkräfte der Stelleinrichtungen 18 sind getrennt einstellbar, so dass die Prägekraft lokal einstellbar ist und Flächenbereiche des abzuprägenden Dekorationselements mit unterschiedlicher Prägekraft beaufschlagbar sind. Unterschiedliche lokale Prägekräfte sind beispielsweise zum Ausgleich einer ungleichmäßigen Flächenbelegung des Dekorationselements erwünscht. Gegenüber dem herkömmlichen Verfahren, den Auflagetisch 12 durch Stellschrauben oder Unterlagen leicht schräg zu stellen, um infolge der Andruckgeometrie lokal unterschiedliche Prägekräfte indirekt einzustellen, bietet die erfindungsgemäße Vorrichtung den Vorteil, Stellkräfte bzw. lokale Prägekräfte direkt einzustellen. Die Stellkräfte sind während des Betriebs und von fern einstellbar, gemäß der Erfindung. Eine Verletzungsgefahr durch Manipulation am heißen Prägestempel besteht nicht mehr. Langes Ausprobieren ist vermieden, die eingestellten Werte sind jederzeit reproduzierbar

Der Auflagetisch 12 kann bei unterschiedlich eingestellten Stellkräften der einzelnen Stelleinrichtungen 18 schräg stehen. Anschläge 19a begrenzen diese Schrägstellung auf einen Maximalwert, der bei den in den Fig. dargestellten, bevorzugten Ausführungsbeispiel bei etwa 4 mm liegt.

Hinsichtlich einer möglichen Schrägstellung des Auflagetisches 12 und unterschiedlich eingestellter Stellkräfte der einzelnen Stelleinrichtungen 18 können verschiedene Fälle auftreten.

Ist das Substrat 13 zum Beispiel ein flaches Teil, welches auf dem Auflagetisch 12 aufliegt und eine zu prägende Oberfläche aufweist, welche parallel zur Oberfläche des Auflagetisches 12 verläuft, wird es beim Prägen des Substrates 13 zu keiner Schrägstellung des Auflagetisches 12 kommen, weil unterschiedlich eingestellte Stellkräfte der einzelnen Stelleinrichtungen 18 nur zu unterschiedlichen Prägedrücken in den jeweiligen Flächenbereichen in der Umgebung der Stelleinrichtungen 18 führen. Dies kann vorteilhaft sein, wenn das zu prägende Motiv dies erfordert. Beispielsweise können einzelne Bereiche des Motives nur eine geringe zu beprägende Fläche aufweisen, was geringen Prägedruck erfordert und andere Bereiche eine große zu beprägende Fläche aufweisen, was einen höheren Prägedruck erfordert. In diesem Fall einer zu prägenden Substrat-Oberfläche, welche parallel zur Oberfläche des Auflagetisches 12 verläuft, kann eine gezielte Schrägstellung des Auflagetisches 12 bei noch nicht als festes Gegenlager aufliegendem Prägestempel 11 sinnvoll sein, um eine nicht planparallele Auflage des Prägestempels11 zu erreichen, sondern ein stückweises Aufliegen oder Abrollen des Prägestempels 11 auf der zu beprägenden Oberfläche zu erzielen, um Lufteinschlüsse in der zu beprägenden Oberfläche zu vermeiden und um die jeweils lokal erforderliche Prägekraft zu verringern. Dazu kann der Prägestempel 11 vorzugsweise leicht gebogen ausgeführt sein, ähnlich einem Wiegestempel. Somit können entstehende lokale Lufteinschlüsse während des Prägevorgangs vermieden oder während des Entstehens herausgedrückt werden und durch die nun vorliegende geringere lokale Prägefläche eine geringere Prägekraft einwirken für denselben nötigen Prägedruck auf die zu beprägende Fläche. Bei heranfahrendem Prägestempel 11 können beispielsweise zwei Stelleinrichtungen 18 so angesteuert werden, dass eine Kante des Auflagetisches 12 höher liegt als eine gegenüberliegende Kante. Trifft der sich insbesondere noch in der Abwärtsbewegung in Richtung Auflagetisch 12 befindliche Prägestempel 11 auf diesen höher gelegenen Bereich des Auflagetisches 12, werden nun die gegenüberliegenden beiden Prägezylinder 11 so angesteuert, dass sich nun der gesamte Auflagetisch 12 in der oberen Anschlagposition befindet. Auf diese Weise wird die gesamte zu beprägende Substrat-Oberfläche geprägt bei sich stetig über die Substrat-Oberfläche abrollenden Prägestempel 11. Je nach Ansteuerung des Prägestempels 11 und der Stelleinrichtungen 18 kann die Geschwindigkeit des Abrollens und des gesamten Prägevorgangs entsprechend variiert und eingestellt werden. Über die gezielt einstellbaren Werte an den Stelleinrichtungen 18, die dafür vorzugsweise mit Proportionalventilen und einer speicherprogrammierbaren Steuerung (SPS) angesteuert werden, ist dieser Prägevorgang jederzeit reproduzierbar. Je nach Teilegeometrie des Substrates 13 sind gebogene, kugelsegmentförmige oder auch ungleichmäßig geformte Prägestempel 11 für die unterschiedlichsten Teilegeometrien des Substrates 13 denkbar.

Für das beschriebene Abrollen des Prägestempels 11 reichen geringe Schrägstellungen des Auflagetisches auf, die im Millimeterbereich oder auch im Zehntelmillimeterbereich liegen können. Dies entspricht wenigen Grad Abweichung von der Waagerechten.

Ist das Substrat 13 ein Teil mit einer dreidimensionalen Oberflächengeometrie, welches auf dem Auflagetisch 12 aufliegt und eine zu prägende Oberfläche aufweist, welche nicht parallel zur Oberfläche des Auflagetisches 12 verläuft, kann es beim Prägen des Substrates 13 zu einer gewünschten Schrägstellung des Auflagetisches 12 kommen, weil unterschiedlich eingestellte Stellkräfte der einzelnen Stelleinrichtungen 18 im Zusammenwirken mit dem festen Gegenlager des insbesondere entsprechend der Oberflächengeometrie des Substrate 13 gegengeformten Prägestempels 11, der auf der Oberfläche des Substrates 13 aufliegt, eine Schrägstellung des Auflagetisches 12 entsprechend der dreidimensionalen Geometrie des Substrates 13 bewirken können. Für ein derartiges Ausgleichen von unterschiedlichen Oberflächengeometrien des Substrates 13 durch unter anderem Schrägstellen des Auflagetisches 12 sind Schrägstellungen des Auflagetisches im Zentimeter- oder auch Dezimeterbereich in Verbindung mit entsprechend den Abmessungen des Substrates 13 ausreichend großen Auflagetisches 12 sinnvoll und möglich. Dies entspricht wenigen Grad bis etwa 10 bis 20 Grad Abweichung von der Waagerechten.

Die Fig. 2 bis 4 zeigen nun ein erstes Ausführungsbeispiel des Auflagetisches.

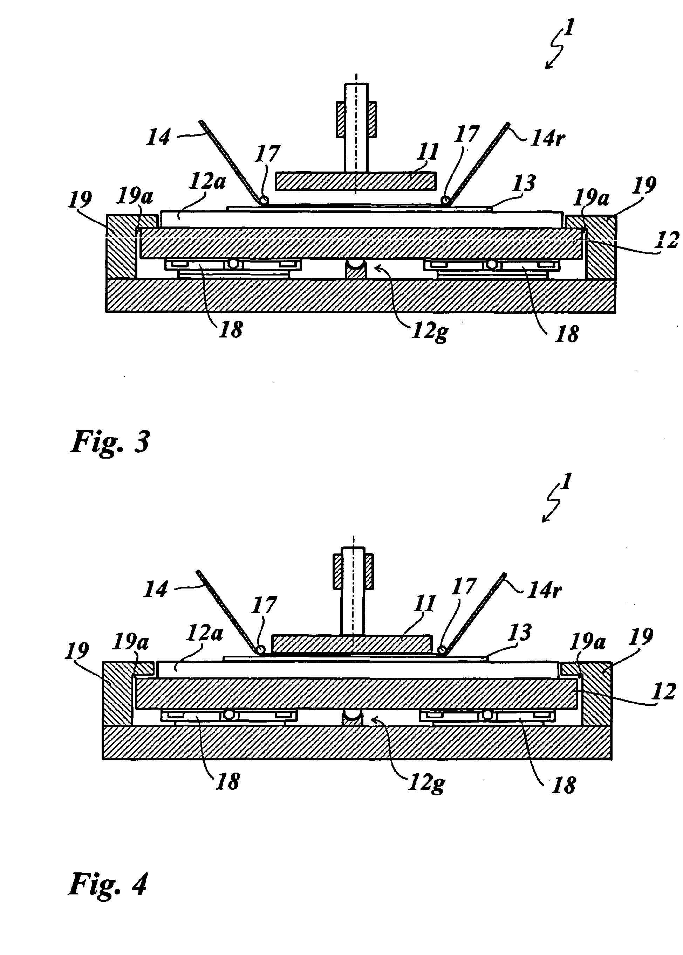

Wie in Fig. 2 dargestellt, sind unter dem Auflagetisch 12 vier Stelleinrichtungen 18 angeordnet. Die Stelleinrichtungen 18 sind jeweils in den Eckbereichen des quadratischen Auftagetischs12 angeordnet, der wie in den Schnittdarstellungen in Fig. 3 und 4 erkennbar, mittels der Stelleinrichtungen 18 entlang der seitlichen Führungen 19 höhenverstellbar ist. Die Stelleinrichtungen 18 sind bei einer bevorzugten Ausführung als pneumatische Stelleinrichtungen mit einem Balgzylinder ausgebildet, wobei der den Stelleinrichtungen 18 zugeführte pneumatische Druck im Bereich von 0,1 bis 10 Bar liegt. Die Querschnittsfläche des Balgzylinders ist so gewählt, dass pro Balgzylinder, z. B. bei einem Durchmesser eines Balgzylinders von etwa 63 mm, eine Stellkraft im Bereich von 30 bis 2000 N aufgebracht wird. Damit liegt die Prägekraft, d. h. die Summe der Stellkräfte der vier Stelleinrichtungen 18, im Bereich von 120 bis 8000 N. Die Variation der Prägekraft in verschiedenen Bereichen des Auflagetisches beträgt etwa ±100 %.

Eine weitere Erhöhung der Stellkräfte pro Stelleinrichtung 18 kann erreicht werden, indem die Stellkräfte einer Stelleinrichtung 18 indirekt über eine Hebelübersetzung an den Auflagetisch 12 angreifen. Dabei kann die Hebelmechanik und die zugehörige Stelleinrichtung 18 gemeinsam unterhalb des Auflagetisches 12 angeordnet sein oder die Stelleinrichtung 18 und Teile der Hebelmechanik können neben dem Auflagetisch 12 angeordnet sein.

Eine Erhöhung des Stellweges der Stelleinrichtung 18 kann erreicht werden, indem mehrere Stelleinrichtungen 18, beispielsweise Druckzylinder, übereinander angeordnet werden und dabei der jeweils untere Druckzylinder den darüberliegenden Druckzylinder nach oben bewegt. Dies geschieht gestaffelt an jedem Druckzylinder bis zum Angriff des obersten Druckzylinders an dem Auflagetisch 12.

Die seitlichen Führungen 19 sind im Querschnitt L-förmig ausgebildet, wobei die dem Auflagetisch 12 zugewandte Innenseite des senkrecht angeordneten einen Schenkels der Führung 19 eine Führungsbahn für den Auflagetisch 12 bildet und die der Oberseite des Auflagetisches 12 zugewandte Innenseite des anderen Schenkels den Anschlag 19a bildet. Der Auflagetisch 12 ist weiter auf einem Kugelgelenk 12g in zwei Achsrichtungen schwenkbar abgestützt, wobei das Kugelgelenk 12g im Schnittpunkt der durch die Mittelpunkte der zylinderförmigen Stelleinrichtungen 18 gelegten Verbindungsdiagonalen angeordnet ist (siehe Fig. 2).

Das Substrat 13 ist in dem in Fig. 3 und 4 dargestellten Ausführungsbeispiel auf einer Teilaufnahme 12a abgelegt und fixiert, die auf dem Auflagetisch 12 angeordnet ist. Die Innenkontur der Teilaufnahme 12a ist der Außenkontur des zu beprägenden Substrats 13 angepasst, so dass das Substrat 13 ohne zusätzliche Mittel in seiner Lage sicher fixiert ist. Es kann aber auch vorgesehen sein, wie weiter oben in Fig. 1 dargestellt, das Substrat 13 über eine Transportvorrichtung zuzuführen, wobei die Transportvorrichtung zugleich das Substrat 13 positionieren und fixieren kann. Bei dem Substrat 13 kann es sich beispielsweise um ein bandförmiges Substrat handeln oder um auf einem Transportband zu- und abgeführte hintereinander angeordnete Substrate. Bei dem Substrat kann es sich beispielsweise um Papier, Pappe oder Karton oder um Kunststoff, z. B. ABS, PP, PET oder ähnliches handeln. Bei dem Substrat 13 kann es sich auch um Metall, insbesondere mit oder ohne darauf aufgebrachten weiteren Schichten (z. B. Lacke, Haftvermittler, Kleber) handeln.

Fig. 3 zeigt, dass die maximale Höhenverstellung des Auflagetisches 12 bei aufwärts bewegtem Prägestempel 11 durch die Anschläge 19a begrenzt ist.

Bei abwärts bewegtem Prägestempel 11, d. h. in der Arbeitsstellung des Prägestempels 11, begrenzt der Prägestempel 11 die maximale Höhenverstellung des Auflagetisches 12. In Folge dessen gelangt der Auflagetisch 12 über die Teilaufnahme 12a, das mit der Oberfläche des Auflagetisches 12 parallele Substrat 13 und die Heißprägefolie 14 zur Anlage an der Unterseite des ebenfalls mit der Oberfläche des Auflagetisches 12 und mit der Oberfläche des darauf angeordneten Substrates 13 parallelen Prägestempels 11, wenn die Stelleinrichtungen 18 betätigt werden. Die Stelleinrichtungen 18 üben nun Stellkräfte aus, denen gleich große Prägekräfte entgegengerichtet sind. Folglich führt die Betätigung der Stelleinrichtungen 18 in dem gezeigten Ausführungsbeispiel nicht zu einer Schräglage des Auflagetischs 12, wie weiter oben beschrieben, sofern nicht der Prägestempel 11 eine elastische Auflage aufweist, beispielsweise eine Silikonauflage.

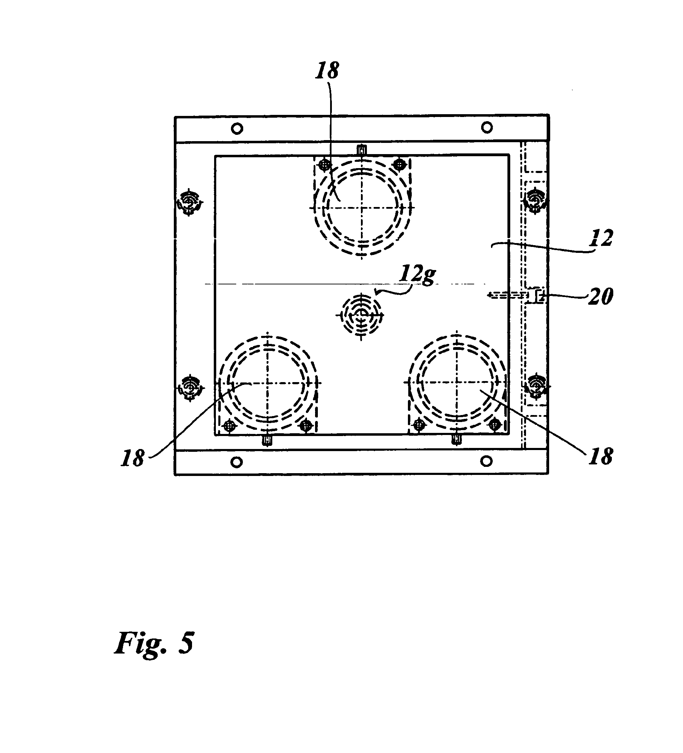

Die Fig. 5 zeigt ein zweites Ausführungsbeispiel, das dem in Fig. 2 beschriebenen Ausführungsbeispiel entspricht, mit dem Unterschied, dass statt vier Stelleinrichtungen 18 nur drei Stelleinrichtungen 18 vorgesehen sind, die in einem gleichseitigen Dreieck angeordnet sind. Das Kugelgelenk 12g ist im Mittelpunkt des Dreiecks angeordnet.

In Fig. 1 und Fig. 5 ist strichliniert ein Verdrehanschlag 20 erkennbar, welcher ein Verdrehen des Auflagetisches 12 verhindert und im Bereich der umlaufenden Führung 19 angeordnet ist. Die Toleranz des Verdrehanschlags 20 ist so eingestellt, dass ein Berühren der Außenkanten des Auflagetisches 12 an der umlaufenden Führung 19 verhindert ist. Der Verdrehanschlag 20 kann nur an einer Seite der Vorrichtung 1, an zwei gegenüberliegenden Seiten oder auch an allen Seiten der Vorrichtung 1 vorgesehen sein.

Eine alternative Anwendung der erfindungsgemäßen Hubpräge-Vorrichtung ist das Ultraschall- oder Hochfrequenzschweißen. Dabei bildet vorzugsweise eine Sonotrode ein festes Gegenlager zu dem verstellbar gelagerten Auflagetisch. Das Substrat, beispielsweise ein zu verschweißendes zweiteiliges Kunststoffteil wie z. B. ein PKW-Scheinwerfergehäuse mit Vorder- und Rückteil, ist in einer Teileaufnahme auf dem Auflagetisch gelagert. Die Sonotrode und die Teileaufnahme sind entsprechend der insbesondere umlaufenden Schweißnaht geformt. Je nach Teilegeometrie im Bereich der Schweißnaht und der Formung der Sonotrode werden nun ggf. jeweils unterschiedliche oder gleiche Stellkräfte mit Hilfe der Stelleinrichtungen erzeugt und der Schweißvorgang durchgeführt. Ein Beispiel einer Druckbeaufschlagung der einzelnen Stelleinrichtungen, in diesem Falle pneumatische Druckzylinder, für eine vorgegebene, aber nicht näher dargestellte Substratgeometrie: Stelleinrichtung I: 4 bar, Stelleinrichtung II: 3 bar, Stelleinrichtung III: 2 bar, Stelleinrichtung IV: 1 bar. Die verwendeten Drücke bewegen sich also in diesem Beispiel zwischen 1 und etwa 10 bar, können aber je nach Größe des Substrates und anderer Randbedingungen des Verfahrens auch höher liegen, beispielsweise zwischen 1 und etwa 1000 bar. Dabei kann es vorteilhaft sein, wenn die Stellkräfte der Stelleinrichtungen während des Schweißvorgangs zeitlich nicht konstant sind, sondern dynamisch, vorzugsweise schnell dynamisch, geändert werden.

Bei einer bevorzugten Variante werden die Stellkräfte zu Anfang jeweils auf einen mittleren Wert eingestellt. Danach wird der Druck pro Stelleinrichtung mittels Proportionalventile und einer Steuerung insbesondere in einem Intervall von etwa 0,1 s um etwa 1 bar erhöht und anschließend wieder auf den mittleren voreingestellten Wert verringert. Durch diese pulsierenden Stellkräfte kann der Schweißvorgang wirkungsvoll unterstützt und die Qualität der Schweißung verbessert werden.

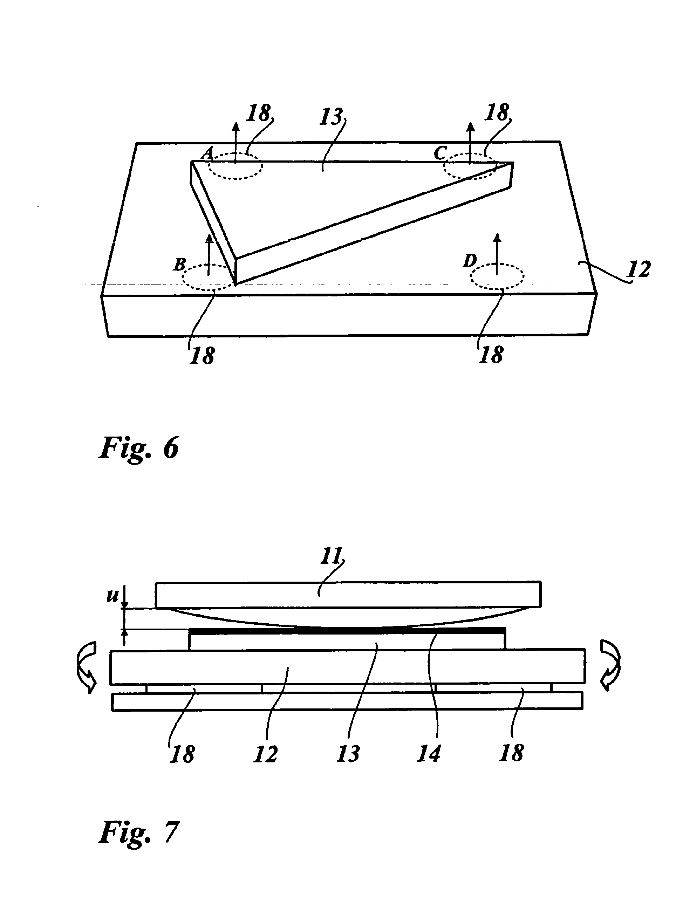

Die Figuren 6 bis 9 zeigen nun ein drittes Ausführungsbeispiel der erfindungsgemäßen Fügevorrichtung, das die Verhältnisse an einem zu beprägenden flachen Substrat verdeutlicht, bei dem es beim Prägen des Substrats 13 zu keiner Schrägstellung des Auflagetisches kommt, weil unterschiedlich eingestellte Stellkräfte der einzelnen Stelleinrichtungen 18 nur zu unterschiedlichen Prägedrücken in den jeweiligen Flächenbereichen in der Umgebung der Stelleinrichtungen 18 führen.

In Fig. 6 ist schematisch ein als dreieckige Platte ausgebildetes Substrat 13 dargestellt, das auf einem Auflagetisch 12 mit vier Stelleinrichtungen 18 angeordnet ist. Die Stelleinrichtungen 18 sind mit A bis D bezeichnet. Die von den Stelleinrichtungen ausgehenden Stellkräfte sind symbolisch durch Richtungspfeile dargestellt. Durch die Ausbildung des zu prägenden Motivs als Dreieck liegt ein Motiv mit unterschiedlicher Flächenbelegung vor und damit mit unterschiedlichen benötigten Prägekräften. Am breiten Teil des Dreiecks ist eine große Fläche vorhanden und somit ist ein großer Prägedruck nötig. An der spitzen Seite des Dreiecks sind kleine Flächen vorhanden und es ist ein geringer Prägedruck nötig.

Wie in Fig. 7 ersichtlich, weist der Prägestempel 11 eine ballige Prägefläche auf, die Kugel- oder zylindersegmentförmig ausgebildet sein kann. Die in Fig. 7 mit u bezeichnete Überhöhung kann je nach Stempelfläche 0,5 bis 2 mm betragen.

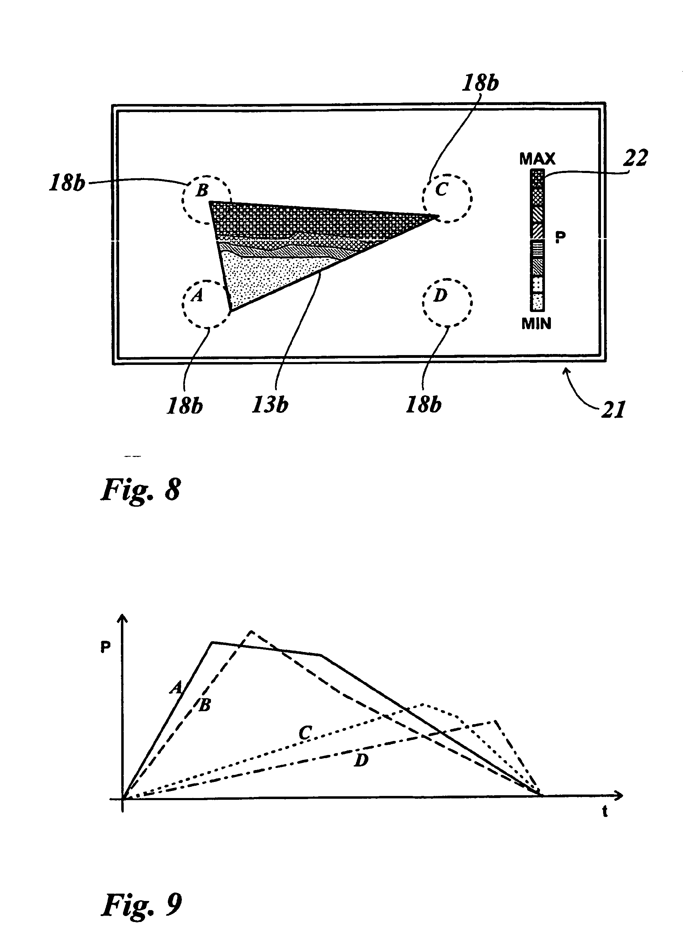

Zum Prägen des Substrats 13 wird die Ansteuerung der vier Stelleinrichtungen 18 mittels einer nicht dargestellten speicherprogrammierbaren Steuerung (SPS) vorgenommen und auf einem Bildschirm 21 grafisch visualisiert. Auf dem Bildschirm 21 sind Bilder 18b der Stelleinrichtungen, ein Bild 13b des Substrats sowie eine als Balkendiagramm ausgebildete Druckskala 22 für den Prägedruck P dargestellt. Die am Substrat 13 auftretenden Prägedrücke P werden auf dem Bild 18b des Substrats mit unterschiedlichen Farben dargestellt, die auf der Druckskala 22 vorgegeben sind. Die unterschiedlichen Farben sind in Fig. 8 durch unterschiedliche Schraffuren symbolisiert.

Ein Bediener der Prägevorrichtung kann durch manuelles Einfärben der Prägefläche mit Hilfe eines nicht dargestellten Eingabeinterfaces die bereichsweise nötigen Prägedrücke am Substrat 13 einstellen. Nach dieser Vorgabe des Bedieners werden die vier mit A bis D bezeichneten Stelleinrichtungen 18 durch die SPS so gesteuert, dass die in Fig. 8 dargestellte Druckverteilung auftritt.

Eine weitere vorteilhafte Wirkung tritt ein, wenn der Prägestempel 11, wie in Fig. 7 dargestellt, eine ballige Prägefläche aufweist, und beim Prägen eine Abrollbewegung ausführt. Damit können Lufteinschlüsse zwischen der Heißprägefolie 14 und dem Substrat 13 wirkungsvoll vermieden werden. Die Abrollbewegung des Prägestempels 11 wird durch einen zeitabhängigen Verlauf der durch die vier Stelleinrichtungen 18 erzeugten Prägedrücke erreicht, wie beispielhaft in Fig. 9 dargestellt. Im Idealfall wird eine linienförmige Berührung zwischen dem Prägestempel 11 und der Prägefläche erzeugt, wobei diese linienförmige Berührung über den Prägebereich geführt wird und Lufteinschlüsse zwischen der zu prägenden Heißprägefolie 14 und der zu beprägenden Oberfläche des Substrats 13 herausgedrängt werden.

### Bezugszeichenliste

- 1: Hubpräge-Vorrichtung
- 11: Prägestempel
- 12: Auflagetisch
- 12a: Teilaufnahme
- 12g: Kugelgelenk
- 13: Substrat
- 13b: Bild des Substrats
- 14: Heißprägefolie
- 14r: Restfolie
- 15: Vorratsrolle
- 16: Aufwickelrolle
- 17: Umlenkrolle
- 18: Stelleinrichtung
- 18b: Bild der Stelleinrichtung
- 19: Führung
- 19a: Anschlag
- 20: Verdrehanschlag
- 21: Bildschirm
- 22: Druckskala

## Patentansprüche

1. Fügevorrichtung (1) zum Fügen zweier Werkstücke mit einem zwischen einer unteren Arbeitsposition und einer oberen Befüllposition auf und ab bewegbaren Stempel (11), wobei zwischen dem Stempel (11) und einem Auflagetisch (12) ein erstes Werkstück (14) und ein unter dem ersten Werkstück (14) angeordnetes zweites Werkstück (13) anordenbar sind, wobei
der Auflagetisch (12) schwenkbar um zwei senkrecht zueinander und senkrecht auf der Bewegungsachse des Stempels (11) stehende Schwenkachsen gelagert ist und mittels Stelleinrichtungen (18) für die Erzeugung einer Prägekraft beim Zusammenwirken mit dem Stempel (11), die der Summe der Stellkräfte der Stelleinrichtungen (18) gleich ist, um die zwei Schwenkachsen schwenkbar ist, wobei der Stempel (11) in der Arbeitsposition ein starres Widerlager bildet, oder
wobei der Stempel (11) schwenkbar um zwei senkrecht zueinander und senkrecht auf der Bewegungsachse des Stempels (11) stehende Schwenkachsen gelagert ist und mittels Stelleinrichtungen (18) für die Erzeugung einer Prägekraft beim Zusammenwirken mit dem Auflagetisch (12), die der Summe der Stellkräfte der Stelleinrichtungen (18) gleich ist, um die zwei Schwenkachsen schwenkbar ist, wobei der Auflagetisch (12) in der Arbeitsposition ein starres Widerlager bildet,
**dadurch gekennzeichnet,**
**dass** die von den Stelleinrichtungen (18) erzeugten Stellkräfte während des Betriebs und von fern einstellbar sind.

2. Fügevorrichtung nach Anspruch 1,
**dadurch gekennzeichnet,**
**dass** das erste Werkstück (14) eine Heißprägefolie ist, wobei die Heißprägefolie mindestens eine Übertragungslage und eine Trägerfolie aufweist, dass das zweite Werkstück (13) ein mit mindestens einem Abschnitt der Übertragungslage zu beprägendes Substrat ist, und dass der Stempel (11) ein beheizter Prägestempel ist.

3. Fügevorrichtung nach Anspruch 1,
**dadurch gekennzeichnet,**
**dass** der Stempel (11) eine Sonotrode ist oder ein Hochfrequenzschweißkopf ist.

4. Fügevorrichtung nach einem der vorangehenden Ansprüche,
**dadurch gekennzeichnet,**
**dass** vier Stelleinrichtungen (18) vorgesehen sind, die in einem vorzugsweise rechtwinkligen Viereck angeordnet sind, wobei ein um zwei senkrecht zueinander stehende Achsen schwenkbares Gelenk (12g) in einem Bereich, der den Schnittpunkt der Diagonalen des Vierecks aufweist, angeordnet ist.

5. Fügevorrichtung nach einem der Ansprüche 1 bis 3,
**dadurch gekennzeichnet,**
**dass** drei Stelleinrichtungen (18) vorgesehen sind, die in einem vorzugsweise gleichschenkligen Dreieck angeordnet sind, wobei das um zwei senkrecht zueinander stehende Achsen schwenkbare Gelenk (12g) in einem Bereich, der den Mittelpunkt des Dreiecks aufweist, angeordnet ist.

6. Fügevorrichtung nach einem der vorangehenden Ansprüche,
**dadurch gekennzeichnet,**
**dass** die Stelleinrichtungen (18) als pneumatische oder hydraulische Stelleinrichtungen ausgebildet sind, insbesondere ein Balgzylinder ist.

7. Fügevorrichtung nach einem der Ansprüche 1 bis 6,
**dadurch gekennzeichnet,**
**dass** die Stelleinrichtungen (18) als elektromechanische Stelleinrichtungen ausgebildet sind.

8. Fügevorrichtung nach einem der vorangehenden Ansprüche,
**dadurch gekennzeichnet,**
**dass** die mit den Stelleinrichtungen (18) zusammenwirkende Einrichtung eine Verdrehsicherung aufweist.

9. Fügevorrichtung nach einem der vorangehenden Ansprüche,
**dadurch gekennzeichnet,**
**dass** die mit den Stelleinrichtungen (18) zusammenwirkende Einrichtung einen Anschlag zur Begrenzung der Stellwege der Stelleinrichtungen (18) aufweist, wobei der Anschlag insbesondere als einstellbarer Anschlag ausgebildet ist.

10. Fügevorrichtung nach einem der vorangehenden Ansprüche,
**dadurch gekennzeichnet,**
**dass** die das starre Widerlager bildende Einrichtung schwenkbar um zwei senkrecht zueinander und senkrecht auf der Bewegungsachse des Prägestempels (11) stehende Schwenkachsen einstellbar ist.

11. Fügevorrichtung nach Anspruch 10,
**dadurch gekennzeichnet,**
**dass** die das starre Widerlager bildende Einrichtung mittels Stellschrauben oder mittels Unterlagen schwenkbar einstellbar ist.

12. Fügevorrichtung nach einem der vorangehenden Ansprüche,
**dadurch gekennzeichnet,**
**dass** auf dem Auflagetisch (12) eine Aufnahme für das Substrat (13) angeordnet ist.

13. Fügevorrichtung nach Anspruch 2,
**dadurch gekennzeichnet,**
**dass** die Vorrichtung eine Vorrats- und Transporteinrichtung für die Heißprägefolie (14) aufweist.

14. Fügevorrichtung nach einem der vorangehenden Ansprüche,
**dadurch gekennzeichnet,**
**dass** die Stelleinrichtungen (18) Sensoren zur Bestimmung der Stellkraft aufweisen und/oder eine kalibrierte Kennlinie der Abhängigkeit der Stellkraft von der Eingangsgröße der Stelleinrichtung aufweisen.

15. Fügevorrichtung nach einem der vorangehenden Ansprüche,
**dadurch gekennzeichnet,**
**dass** die Stelleinrichtungen (18) mit einer Steuerungseinrichtung zur Messung und/oder Einstellung der Stellkraft verbunden sind.

## Claims

1. Joining device (1) to join two work pieces, having a stamp (11) moving back and forth between a lower working position and an upper filling position, wherein a first work piece (14) and a second work piece (13), which is arranged under the first work piece (14), are able to be arranged between the stamp (11) and a worktable (12), wherein
the worktable (12) is; assembled for rotation around two axes of rotation which are perpendicular to each other and perpendicular to the axis of movement of the stamp (11), and is able to rotate around the two axes of rotation by means of actuating devices (18) for the production of a shaping force when there is interaction with the stamp (11), which is equal to the sum of the actuating forces of the actuating devices (18), wherein the stamp (11) forms a fixed abutment in the working position, or
wherein the stamp (11) is assembled for rotation around two axes of rotation which are perpendicular to each other and perpendicular to the axis of movement of the stamp (11), and is able to rotate around the two axes of rotation by means of an actuating device (18) for the production of a shaping force when there is interaction with the worktable (12), which is equal to the sum of the actuating forces of the actuating devices (18), wherein the worktable (12) forms a fixed abutment in the working position,
**characterised in that**,
the actuating forces produced by the actuating devices (18) are adjustable during the operation and from a distance.

2. Joining device according to claim 1,
**characterised in that**,
the first work piece (14) is a hot embossing film, wherein the hot embossing film has at least one transfer layer and one backing film,
that the second work piece (13) is a substrate that is to be shaped with at least one section of the transfer layer,
and that the stamp (11) is a heated embossing stamp.

3. Joining device according to claim 1,
**characterised in that**,
the stamp (11) is a sonotrode or a high-frequency welding head.

4. Joining device according to one of the preceding claims,
**characterised in that**,
four actuating devices (18) are provided, which are arranged in a preferably right-angled quadrilateral, wherein a joint (12g) that can be rotated around two axes which are perpendicular to each other is arranged in a region which contains the point of intersection of the diagonals of the quadrilateral.

5. Joining device according to one of claims 1 to 3,
**characterised in that**,
three actuating devices (18) are provided, which are arranged in a preferably equilateral triangle, wherein the joint (12g) that can be rotated around two axes which are perpendicular to each other is arranged in a region which contains the central point of the triangle.

6. Joining device according to one of the preceding claims,
**characterised in that**,
the actuating devices (18) are formed as pneumatic or hydraulic actuating devices, in particular a bellows cylinder.

7. Joining device according to one of claims 1 to 6,
**characterised in that**,
the actuating devices (18) are formed as electromechanical actuating devices.

8. Joining device according to one of the preceding claims,
**characterised in that**,
the device which interacts with the actuating devices (18) has an anti-rotation lock.

9. Joining device according to one of the preceding claims,
**characterised in that**,
the device which interacts with the actuating devices (18) has a stop to limit the displacement of the actuating devices (18), wherein the stop is in particular formed as an adjustable stop.

10. Joining device according to one of the preceding claims,
**characterised in that**,
the device which forms the fixed abutment is able to rotate around two axes of rotation which are perpendicular to each other and perpendicular to the axis of movement of the embossing stamp (11).

11. Joining device according to claim 10,
**characterised in that**,
the device which forms the fixed abutment can be adjusted for rotation by means of adjusting screws or by means of components.

12. Joining device according to one of the preceding claims,
**characterised in that**,
a holding fixture for the substrate (13) is arranged on the worktable (12).

13. Joining device according to claim 2,
**characterised in that**,
the device has a storage and transport device for the hot embossing film (14).

14. Joining device according to one of the preceding claims,
**characterised in that**,
the actuating devices (18) have sensors to identify the actuating force and/or have a characteristic curve of the connection of the actuating force to the input of the actuating device.

15. Joining device according to the preceding claims,
**characterised in that**,
the actuating devices (18) are connected to a device which controls the measuring and/or position of the actuating force.

## Revendications

1. Dispositif d'assemblage (1) servant à assembler deux pièces, comprenant un poinçon (11) pouvant être déplacé vers le haut et vers le bas entre une position inférieure de travail et une position supérieure de remplissage, sachant que peuvent être disposées entre le poinçon (11) et une table d'appui (12) une première pièce (14) et une deuxième pièce (13) disposée sous la première pièce (14), sachant que
la table d'appui (12) est logée de manière à pouvoir pivoter autour de deux axes de pivotement s'étendant de manière perpendiculaire l'un par rapport à l'autre et situés de manière perpendiculaire sur l'axe de déplacement du poinçon (11), et peut être pivotée autour des deux axes de pivotement au moyen de systèmes de réglage (18) pour la génération d'une force d'estampage lors de la coopération avec le poinçon (11), laquelle force d'estampage étant égale à la somme des forces de réglage des systèmes de réglage (18), sachant que le poinçon (11) constitue dans la position de travail une contre-butée immobile, ou
sachant que le poinçon (11) est logé de manière à pouvoir pivoter autour de deux axes de pivotement s'étendant de manière perpendiculaire l'un par rapport à l'autre et situés de manière perpendiculaire sur l'axe de déplacement du poinçon (11), et peut être pivoté autour des deux axes de pivotement au moyen de systèmes de réglage (18) pour la génération d'une force d'estampage lors de la coopération avec la table d'appui (12), laquelle force d'estampage étant égale à la somme des forces de réglage des systèmes de réglage (18), sachant que la table d'appui (12) constitue dans la position de travail une contre-butée immobile,
**caractérisé en ce que**
les forces de réglage générées par les systèmes de réglage (18) peuvent être ajustées au cours du fonctionnement et à distance.

2. Dispositif d'assemblage selon la revendication 1,
**caractérisé en ce que**
la première pièce (14) est une feuille d'estampage à chaud, sachant que la feuille d'estampage à chaud présente au moins une couche de transfert et une feuille de support, **en ce que** la deuxième pièce (13) est un substrat à estamper avec au moins une section de la couche de transfert, et **en ce que** le poinçon (11) est un poinçon d'estampage chauffé.

3. Dispositif d'assemblage selon la revendication 1,
**caractérisé en ce que**
le poinçon (11) est une sonotrode ou une tête de soudage haute fréquence.

4. Dispositif d'assemblage selon l'une quelconque des revendications précédentes,
**caractérisé en ce que**
quatre systèmes de réglage (18) sont prévus, lesquels sont disposés dans un quadrilatère de préférence rectangulaire, sachant qu'une articulation (12g) pouvant pivoter autour de deux axes perpendiculaires l'un par rapport à l'autre est disposée dans une zone, qui présente le point d'intersection des diagonales du quadrilatère.

5. Dispositif d'assemblage selon l'une quelconque des revendications 1 à 3,
**caractérisé en ce que**
trois systèmes de réglage (18) sont prévus, lesquels sont disposés dans un triangle de préférence isocèle, sachant que l'articulation (12g) pouvant pivoter autour de deux axes perpendiculaires l'un par rapport à l'autre est disposée dans une zone, qui présente le point central du triangle.

6. Dispositif d'assemblage selon l'une quelconque des revendications précédentes,
**caractérisé en ce**
**que** les systèmes de réglage (18) sont réalisés sous la forme de systèmes de réglage pneumatiques ou hydrauliques, en particulier sont des cylindres à soufflets.

7. Dispositif d'assemblage selon l'une quelconque des revendications 1 à 6,
**caractérisé en ce que**
les systèmes de réglage (18) sont réalisés sous la forme de systèmes de réglage électromécaniques.

8. Dispositif d'assemblage selon l'une quelconque des revendications précédentes,
**caractérisé en ce que**
le système coopérant avec les systèmes de réglage (18) présente un système de sécurité anti-rotation.

9. Dispositif d'assemblage selon l'une quelconque des revendications précédentes,
**caractérisé en ce que**
le système coopérant avec les systèmes de réglage (18) présente une butée servant à délimiter les courses de réglage des systèmes de réglage (18), sachant que la butée est réalisée en particulier sous la forme d'une butée ajustable.

10. Dispositif d'assemblage selon l'une quelconque des revendications précédentes,
**caractérisé en ce que**
le système constituant la contre-butée immobile peut être ajusté de manière à pouvoir pivoter autour de deux axes de pivotement s'étendant de manière perpendiculaire l'un par rapport à l'autre et situés de manière perpendiculaire sur l'axe de déplacement du poinçon d'estampage (11).

11. Dispositif d'assemblage selon la revendication 10,
**caractérisé en ce que**
le système constituant la contre-butée immobile peut être ajusté de manière à pouvoir pivoter au moyen de vis de réglage ou au moyen de sous-couches.

12. Dispositif d'assemblage selon l'une quelconque des revendications précédentes,
**caractérisé en ce que**
un logement pour le substrat (13) est disposé sur la table d'appui (12).

13. Dispositif d'assemblage selon la revendication 2,
**caractérisé en ce que**
le dispositif présente un système de réservoir et de transport pour la feuille d'estampage à chaud (14).

14. Dispositif d'assemblage selon l'une quelconque des revendications précédentes,
**caractérisé en ce que**
les systèmes de réglage (18) présentent des capteurs servant à déterminer la force de réglage et/ou présentent une courbe caractéristique calibrée relative à la dépendance de la force de réglage de la grandeur d'entrée du système de réglage.

15. Dispositif d'assemblage selon l'une quelconque des revendications précédentes,
**caractérisé en ce que**
les systèmes de réglage (18) sont reliés à un système de commande servant à mesurer et/ou à ajuster la force de réglage.
